# DEMANDE DE BREVET EUROPEEN

(11) **EP 0 884 882 A1**
(43) Date de publication de la demande: **16.12.1998**
(21) Numéro de dépôt: 98201810.3
(22) Date de dépôt: 02.06.1998
(51) Int. Cl.: H04M 1/72

(54) **Appareil téléphonique sans fil**

(30) Priorité: 10.06.1997 FR 9707186
(71) Demandeur: Koninklijke Philips Electronics N.V., 5621 BA Eindhoven (NL)
(72) Inventeur: Auffray, Michel, 75008 Paris (FR)
(74) Mandataire: Caron, Jean

(57) **Abrégé**

L'appareil comprend une base et au moins un combiné, chacun étant muni de circuits d'émission et de réception avec des moyens de scrutation pour analyser les différents canaux (N) tour à tour afin de rechercher si une demande de liaison est émise dans un canal, la définition (L) du canal utilisé étant indiquée dans les données d'une demande de liaison émise par un émetteur.

Selon l'invention, chaque module comprend, des moyens pour, lors d'une scrutation en réception, rechercher dans les données reçues le numéro (L) de canal et pour, si ce numéro (L) est différent de celui (N) du canal analysé, se caler immédiatement sur le canal portant ce numéro (L).

Applications : téléphones dits sans-fil.

## Description

La présente invention concerne un appareil téléphonique dit sans fil, comprenant un module dit base et au moins un module dit combiné, dans lequel chaque module est muni de circuits d'émission et de réception comprenant entre autres des moyens pour se caler sur un canal parmi une pluralité de canaux de fréquences différentes, un élément dit de scrutation pour recevoir et analyser les différents canaux tour à tour afin de rechercher si une demande de liaison est émise dans un canal par un autre module, et des moyens pour incorporer parmi les données d'une émission de données dans un canal déterminé, une donnée de définition du canal utilisé.

Un radio-téléphone selon le préambule ci-dessus est connu du document EP-A-0 055 097. Selon ce document, un téléphone cellulaire reçoit des données indiquant, entre autres, le numéro de canal utilisé par l'émetteur.

Dans un appareil téléphonique dit sans fil, pendant une phase de scrutation, si une entité, base ou combiné, émet une porteuse dans un canal donné, une modulation parasite est susceptible de se produire, ayant pour effet que le récepteur en scrutation peut alors recevoir cette porteuse alors qu'il est calé sur un autre canal. Ce récepteur peut donc être induit en erreur et se mettre en réception sur un canal non approprié. Pour éviter cela, il est prévu habituellement que le récepteur lit le numéro qui est indiqué dans les données, en vérifie la concordance avec le canal sur lequel il est calé et, s'il n'y a pas concordance, ne tient pas compte de la réception et continue la scrutation.

Un objet de l'invention est de rendre plus rapide la réponse à une demande de liaison entre la base et le combiné.

A cet effet, chaque module comprend des moyens pour, lors d'une scrutation, lire dans les données du canal analysé la donnée correspondant au numéro de canal et se caler immédiatement sur le canal portant ce numéro s'il est différent de celui du canal analysé.

L'invention est donc basée sur l'idée d'exploiter des données, éventuellement reçues par erreur, pour en tirer une information utile.

Ces aspects de l'invention ainsi que d'autres aspects plus détaillés apparaîtront plus clairement grâce à la description suivante d'un mode de réalisation constituant un exemple non limitatif.

La figure 1 représente le schéma d'un appareil téléphonique dans lequel l'invention s'applique.

La figure 2 est un organigramme du processus de scrutation.

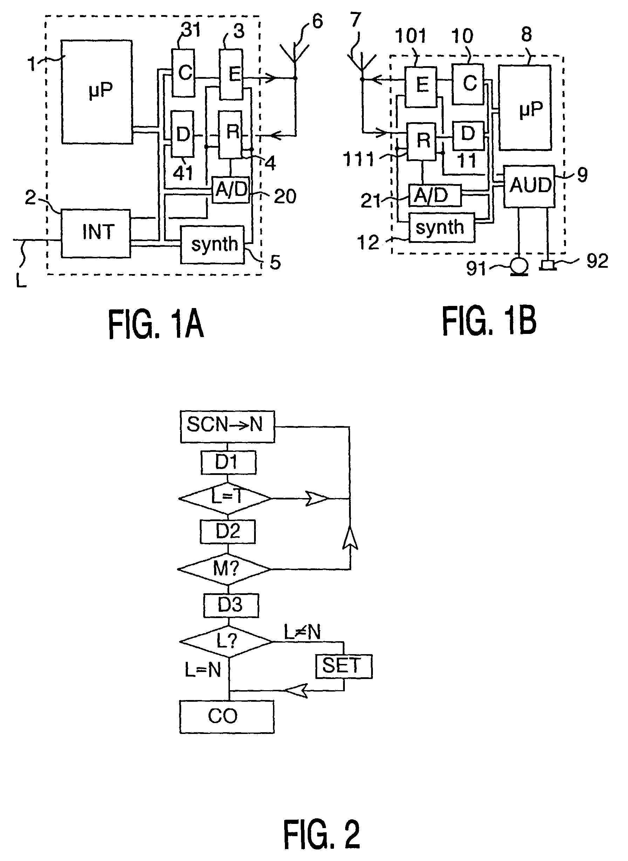

L'appareil téléphonique représenté par la figure 1 comporte deux éléments: en A une base et en B un combiné.

La base comporte un élément 2 d'interface avec une ligne téléphonique L, élément connu en soi, qui est relié, pour communiquer avec le combiné, à un élément d'émission radio 3 et un élément de réception radio 4, tous deux reliés à une antenne 6. Un décodeur 41 est relié à l'élément de réception radio 4 pour décoder des données numériques. Un encodeur 31 est relié à l'élément d'émission radio 3 pour encoder des données numériques. Pour permettre le choix d'une fréquence de canal à la demande, la base est munie d'un synthétiseur de fréquences 5 connu, avec une boucle de mesure de phase pour le réglage de la fréquence, dite PLL. Elle comporte en outre un microprocesseur 1 pour gérer différentes fonctions, entre autres la conduite d'un processus de scrutation. Ce microprocesseur 1 est relié, par un bus, au moins aux éléments 2, 5, 31, 41 de la base, pour les commander ou en recevoir des informations.

Le combiné comporte un microphone 91 et un écouteur 92, pour la transmission de signaux acoustiques, reliés à un élément de traitement audio 9, connu en soi. Pour la communication radio avec la base, il comporte un élément d'émission radio 101 et un élément de réception radio 111, tous deux reliés à une antenne 7. Un décodeur 11 est relié à l'élément de réception radio 111 pour décoder des données numériques. Un encodeur 10 est relié à l'élément d'émission radio 101 pour encoder des données numériques. Pour permettre le choix d'une fréquence de canal à la demande, le combiné est muni également d'un synthétiseur de fréquences 12 connu, avec une boucle de mesure de phase pour le réglage de la fréquence, dite PLL. Il comporte en outre un microprocesseur 8 pour gérer différentes fonctions, entre autres la conduite d'un processus de scrutation. Ce microprocesseur 8 est relié, par un bus, au moins aux éléments 9, 10, 11, 12 du combiné, pour les commander ou en recevoir des informations.

Lorsqu'un module, qui peut aussi bien être la base que le mobile, veut établir une liaison radio, appelée lien, il recherche d'abord un canal libre, selon une technique connue en soi et qui ne fait pas partie de la présente invention. Le demandeur de lien émet alors dans ce canal une porteuse contenant des données numériques constituées de trames de longueur fixe. Une trame comporte entre autres un code d'identification du module, un code de demande d'établissement de lien, un code indiquant le numéro de canal sur lequel l'émetteur est calé et souhaite établir le lien. Une telle demande est susceptible d'être émise aussi bien par le combiné que par la base.

Le susdit élément de scrutation est constitué par un logiciel du processeur 1 ou 8. Le fonctionnement de ce logiciel est illustré par la figure 2, et comporte les étapes suivantes :
- une routine SCN→N commande le positionnement du circuit PLL sur un canal appelé M, puis met en service la détection et le décodage des données,
- après un délai D1, le niveau de porteuse est mesuré et on teste si une porteuse est présente dans le canal. A l'issue du test noté L>T, si le canal est libre, le processus revient à la routine SCN→N pour passer au canal N suivant, alors que, si une porteuse est décelée dans le canal, le processeur attend encore, pendant un délai D2,
- après ce délai, dans le test M?, il est recherché si des données ont été détectées. S'il n'y a pas eu détection de données, le processeur revient à la routine SCN→N pour passer au canal suivant. S'il y a eu détection de données, alors le processeur attend pendant un nouveau délai D3,
- puis dans un test noté L?, il est recherché si une trame de demande d'établissement de lien complète a été reçue et détectée, avec un code d'identification du mobile correct et un numéro de canal dans les données, numéro appelé L.
- alors :
   - si les numéros de canal L et N sont les mêmes, la communication CO entre base et mobile est initiée.
   - si le numéro de canal L est différent de N, le processeur vient à la routine SET qui commande le positionnement du circuit PLL sur le canal L, puis à la routine CO qui établit la communication.

## Revendications

1. Appareil téléphonique dit sans fil, comprenant un module dit base et au moins un module dit combiné, dans lequel chaque module est muni de circuits d'émission et de réception comprenant entre autres des moyens pour se caler sur un canal parmi une pluralité de canaux de fréquences différentes, un élément dit de scrutation pour recevoir et analyser les différents canaux tour à tour afin de rechercher si une demande de liaison est émise dans un canal par un autre module, et des moyens pour incorporer parmi les données d'une émission de données dans un canal déterminé, une donnée de définition du canal utilisé, **caractérisé en ce que** chaque module comprend des moyens pour, lors d'une scrutation, lire dans les données du canal analysé la donnée correspondant au numéro de canal et se caler immédiatement sur le canal portant ce numéro s'il est différent de celui du canal analysé.
